(19) Europäisches Patentamt
European Patent Office
Office européen des brevets

(11) Veröffentlichungsnummer: **0 395 990 B1**

(12) **EUROPÄISCHE PATENTSCHRIFT**

(45) Veröffentlichungstag der Patentschrift: **05.01.94**

(51) Int. Cl.[5]: **C08F 246/00**, C09J 157/04

(21) Anmeldenummer: **90107722.2**

(22) Anmeldetag: **24.04.90**

(54) **Durch ultraviolette Strahlung unter Luftsauerstoffatmosphäre vernetzbare Copolymerisate.**

(30) Priorität: **29.04.89 DE 3914374**

(43) Veröffentlichungstag der Anmeldung:
**07.11.90 Patentblatt 90/45**

(45) Bekanntmachung des Hinweises auf die Patenterteilung:
**05.01.94 Patentblatt 94/01**

(84) Benannte Vertragsstaaten:
**BE DE FR GB IT NL**

(56) Entgegenhaltungen:
**EP-A- 0 246 848**
**EP-A- 0 377 199**
**FR-A- 1 551 599**
**US-A- 3 575 925**

(73) Patentinhaber: **BASF Aktiengesellschaft**
**Carl-Bosch-Strasse 38**
**D-67063 Ludwigshafen(DE)**

(72) Erfinder: **Rehmer, Gerd, Dr.**
**Koenigsberger Strasse 1**
**D-6711 Beindersheim(DE)**
Erfinder: **Boettcher, Andreas, Dr.**
**Konrad-Adenauer-Ring 38**
**D-6907 Nussloch(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Ziel der vorliegenden Erfindung sind mit UV-Licht an der Luft vernetzbare Massen, die insbesondere als Schmelzhaftkleber, zur Beschichtung von mineralischen Substanzen, z.B. Dachziegeln, und als Lacke verwendet werden können. Die Massen sollen erhöhte Reaktivität gegen UV-Strahlen haben. Bei der Verwendung als Schmelzhaftkleber sollen die Produkte geringe Schmelzviskosität, gute Klebrigkeit und eine erhöhte Wärmestandfestigkeit aufweisen.

Aus der NL-Patentanmeldung 6 606 711 sind schon Haftklebebänder bekannt, die durch überziehen eines flächigen Substrates mit einem Polyacrylatkleber hergestellt sind, wobei mindestens ein monomerer Acrylsäureester, z.B. 2-Ethylhexylacrylat, mitverwendet und durch UV-Bestrahlung und anschließendes Erhitzen polymerisiert wird. Um dabei jedoch brauchbare Ergebnisse zu erzielen, muß unter Inertgasatmosphäre belichtet werden. Außerdem ist die Mitverwendung der gegebenenfalls haut- und augenreizenden leichtflüchtigen Acrylester von Nachteil.

Aus der NL-Patent 7 009 629 ist zudem ein Verfahren zur Herstellung von Klebstoffen bekannt, bei dem Gemische aus Acryl- und Methacrylsäureestern, wie 2-Ethylhexylacrylat, mit organischen Polymeren, wie Cellulosederivaten, Polyolefinen oder Polyestern als Viskositätsregulatoren und ggf. zusammen mit einem Tackifier, wie Polyvinylmethylether, in dünner Schicht auf ein flächiges Substrat aufgebracht und mit energiereicher Strahlung behandelt werden. Auch hierbei ist die Mitverwendung der monomeren Meth(acryl)estern, die reizend wirken und leicht flüchtig sind, von Nachteil, und man erhält zudem nur Produkte, deren Kohäsion für viele Anwendungen auf dem Haftklebergebiet nicht ausreicht.

Bei dem Verfahren der DE-OS 23 57 586 zur Herstellung selbsthaftender Überzüge wird mit ionisierenden Strahlen bestrahlt, und zwar ein bei Raumtemperatur flüssiges Gemisch aus

(A) einem monoolefinisch ungesättigten Monomeren, das bei Raumtemperatur klebrige Polymerisate bildet,
(B) einer mindestens zweifach olefinisch ungesättigten Verbindung,
(C) einem Polymeren eines Erreichungspunktes unter 50 °C und eines durchschnittlichen Molekulargewichtes zwischen 500 und 10.000 und
(D) einem üblichen Photoinitiator, z.B. Benzoin, Acetophenon oder Benzophenon,

das gleichfalls auf ein flächiges Substrat aufgebracht ist. Auch bei diesem Verfahren können als Monomere (A) Acryl- und Methacrylsäureester von 4 bis 12 C-Atome enthaltenden Alkanolen eingesetzt werden. Die nach diesem Verfahren hergestellten Klebeschichten weisen zwar hohe Scherfestigkeit bei Raumtemperatur und gute Oberflächenklebrigkeit auf, zeigen aber verhältnismäßig starken kalten Fluß und bei erhöhten Temperaturen ungenügende Scherfestigkeiten.

Mit energiereicher Strahlung wird auch bei dem Verfahren der EP-PS 88 300 gearbeitet, bei dem selbsthaftende überzüge unter Beschichten von Trägermaterialien mit Derivaten von Dihydroxipropylacrylsäureestern im Gemisch mit Polymeren einer Glastemperatur unter 0 °C und eines K-Wertes von 20 bis 80 und/oder einem klebrigmachenden Harz erhalten werden. Hierbei werden zwar gute Oberflächenklebrigkeiten und gute Wärmestandfestigkeiten erzielt, doch treten durch die reizend wirkenden Monomeren und das erforderliche Arbeiten unter Inertgasatmosphäre Nachteile auf.

Da bei Massen, die mit UV-Strahlen vernetzt werden sollen, Photoinitiatoren mitverwendet werden, sollen diese möglichst in den Massen gut löslich sein und aus den Massen nicht ausschwitzen, so daß die Massen auch bei erhöhter Temperatur verarbeitet werden können. Auch sollen diese Photoinitiatoren beim Bestrahlen keine zum Ausschwitzen neigende Abbauprodukte mit starkem Eigengeruch bilden.

Man hat daher auch schon einpolymerisierbare Photoinitiatoren in UV-härtbaren Massen mitverwendet. So werden in der EP-OS-0 017 364 z.B. Copolymerisate beschrieben, die u.a. als Klebstoffe und für Dichtungsmassen geeignet sind, und die 0,1 bis 10 Gew.% Allylbenzoylbenzoat als Photoinitiator einpolymerisiert enthalten. Diese Massen lassen sich zwar mit UV-Strahlen vernetzen, ergeben jedoch vernetzte Produkte mit sehr hoher Viskosität. Außerdem ist ihre Reaktivität gegenüber UV-Strahlen zu gering, und damit hergestellte haftklebrige Schichten erfüllen nicht die Anforderungen, die an einen guten Haftkleber gestellt werden. Ferner werden bei diesem Verfahren (Beispiel 10) zusätzlich reizende Monomere mitverwendet.

Nach der Lehre der DE-OS 24 11 169 können mit ultraviolett-Strahlen vernetzbare Haftklebstoffe hergestellt werden, indem man Copolymerisate aus (Meth)acrylestern einsetzt, die monoolefinisch ungesättigte Ether- und Ester-Derivate von substituierten Benzophenonen als Photoinitiatoren einpolymerisiert enthalten. Die dabei einpolymerisierten Benzophenon-Derivate sind jedoch gegenüber UV-Strahlen wenig reaktiv und die aus den Copolymerisaten hergestellten druckempfindlichen Klebstoffe genügen hohen Anforderungen nicht. Außerdem zeigen danach hergestellte Schmelzklebstoffe eine zu hohe Schmelzviskosität, die ihrem praktischen Einsatz im Wege steht.

Auch aus der EP-OS-02 46 848 sind mit UV-Strahlen vernetzbare Haftklebstoffe auf Basis von Polyacrylaten bekannt, die als Photoinitiatoren monoolefinisch ungesättigte Benzophenon-Derivate einpolymerisiert enthalten. Diese Haftklebstoffe sollen auf dem medizinischen Gebiet, z.B. für Pflaster, eingesetzt werden und ihre Adhäsion zur Haut soll im Laufe der Zeit nicht zunehmen. Ein Nachteil dieser Haftklebstoffe ist jedoch darin zu sehen, daß sie gegenüber UV-Strahlen nur eine geringe Reaktivität und vergleichsweise hohe Schmelzviskosität besitzen.

Die DE-OS-36 13 082 beschreibt die Herstellung von strahlenhärtbaren (UV- und Elektronenstrahlen) (meth)acrylierten Polyestern und deren Verwendung zur Herstellung von Haftklebestoffen. Von Nachteil sind hierbei: Die unter UV-vernetzten Haftklebeschichten weisen nur eine geringe Klebrigkeit auf. Die unter Luftsauerstoffatmosphäre vernetzten Produkte genügen nicht den Anforderungen, die an einen Haftklebestoff gestellt werden. Die Herstellung ist besonders aufwendig, insbesondere kann nicht auf die Umsetzung mit olefinisch ungesättigten Verbindungen verzichtet werden.

Aus der DE-PS-33 23 913 ist bekannt die Herstellung und Verwendung von Polyisobutylenbernsteinsäurehalbestern und ihre Verwendung zur Herstellung eines Klebemittels. Diese Produkte genügen jedoch nicht den hohen Anforderungen, die an einen Haftklebestoff gestellt werden. Insbesondere müssen auch diese Produkte in einer polymeranalogen Reaktion mit doppelbindungshaltigen Verbindungen umgesetzt werden.

Schließlich beschreibt die DE-PS-26 21 096 halogenhaltige photopolymerisierbare Klebstoffe auf der Basis von Polykondensaten und -addukten. Diese Produkte enthalten ungesättigte organische Verbindungen, die mindestens zwei Reste von Acrylsäure oder Methacrylsäure aufweisen. Nachteil hierbei ist: Diese Klebstoffe werden vorwiegend zum Laminieren eingesetzt; auch hier kann auf olefinisch ungesättigte Verbindungen nicht verzichtet werden. Insbesondere kann nicht auf halogenierte (chlorhaltige) Einsatzstoffe verzichtet werden.

Es wurde nun gefunden, daß man durch ultraviolette Strahlung unter Luftsauerstoffatmosphäre vernetzbare Copolymerisate durch ein Verfahren erhält, das dadurch gekennzeichnet ist, daß man eine Mischung aus

| | |
|---|---|
| (A) 80 bis 99,9 Gew.% | olefinisch ungesättigten Monomeren, |
| (B) 0 bis 10 Gew.% | einer copolymerisierbaren olefinisch ungesättig ten, photoreaktiven, im durch UV-Strahlung ange regten Zustand zur Wasserstoffabstraktion befähigten Verbindung, und |
| (c) 0,1 bis 10 Gew.% | einer, die Polymerisation regelnden, photoreakti ven, im angeregten Zustand zur Wasserstoffabstraktion befähigten Verbindung, welche keine copolymerisierbare, olefinisch ungesättigte Doppelbindung enthält, |

radikalisch polymerisiert, wobei die Summe aus (B) und (C) mindestens 0,1 Gew.% beträgt und die angegebenen Gewichtsprozente sich auf die Summe der Gewichte aus (A) + (B) + (C) beziehen.

Zu den beim erfindungsgemäßen Verfahren einzusetzenden Komponenten ist im einzelnen das Folgende zu sagen:

(A) Olefinisch ungesättigte Monomere

Die Copolymerisate (P) enthalten als Hauptmonomere meist überwiegende Anteile, 80 - 99,9 Gew.%, bevorzugt 90 - 99,5 Gew.%, (Meth)acrylsäureester von Alkanolen mit 1 bis 24 C-Atomen, wie Methyl-, Ethyl-, n-Propyl-, i-Propyl-, n-, i- und t-Butyl-, 2-Ethylhexyl-, Amyl-, i-Amyl-, i-Octyl-, Decyl-, Lauryl-, Stearyl(meth)acrylat. Geeignet sind auch Vinylester 1 bis 20 C-Atome enthaltender gesättigter Carbonsäuren, wie Vinylformiat, Vinylacetat, -propionat, -2-ethylhexanat, -laurat und -stearat, ferner Vinylether mit 3 bis 22 C-Atomen, wie Methyl-, Ethyl-, Butyl-, Hexyl-, Octadecylvinylether. Des gleichen eignen sich Vinylaromaten mit 8 bis 12 C-Atomen, wie Styrol, oder ferner $\alpha$-Methylstyrol, Vinyltoluole, t-Butylstyrol und Halogenstyrole, ferner auch Monoolefine mit 2 bis 20 C-Atomen, wie Ethylen, Propylen, n- und i-Butylen, Diisobuten, Triisobuten und Oligopropylene und/oder Diolefine, wie Butadien und/oder Vinylhalogenide, wie Vinylchlorid und Vinylidenchlorid, sowie Allylether und Allylester.

Darüber hinaus enthalten die Copolymerisate (P) gegebenenfalls 0 bis 20 Gew.%, bevorzugt 0,25 bis 10 Gew.%, $\alpha,\beta$-monoolefinisch ungesättigte Säuren einpolymerisiert. Geeignet sind z.B. Mono- und Dicarbonsäuren mit 3 bis 6 C-Atomen, sowie die Monoester von 4 bis 6 C-Atomen enthaltenden Dicarbonsäuren mit 1 bis 24 C-Atomen enthaltenden Alkanolen und/oder deren Anhydride, ferner olefinisch ungesättigte Sulfonsäuren und Phosphonsäuren, wie Vinylsulfonsäure und Vinylphosphonsäure. Bevorzugt verwendet man (Meth)acrylsäure, Crotonsäure, Maleinsäure, Fumarsäure, Itaconsäure, Monomethyl-, -butyl, -2-ethylhexyl, -i-amyl, -i-octyl und/oder -stearylmaleinat und/oder Maleinsäureanhydrid, Itaconsäureanhydrid und (Meth)acrylsäureanhydrid.

Eine weitere Gruppe Copolymerisate (P) enthält in Mengen von 0 bis 20 Gew.%, bevorzugt 0,5 bis 10 Gew.% Tetrahydrofurfuryl-2-(meth)-acrylat, Tetrahydrofurfuryl-2-(meth)-acrylamid und/oder alkoxygruppenenthaltende Monomere wie 3-Methoxybutyl(meth)acrylat, 2-Methoxyethyl(meth)acrylat, 2-Butoxyethyl(meth)acrylat, 2-Ethoxyethyl(meth)acrylat, vorzugsweise Tetrahydrofurfuryl-2-(meth)-acrylat, einpolymerisiert.

Eine weitere Gruppe Copolymerisate (P) enthält in Mengen von 0 bis 20 Gew.%, bevorzugt 0,25 bis 5 Gew.%, N-substituierte Amide einpolymerisiert, wie N-Vinylimidazol, N-Vinylpyrrolidon, N-Vinylformamid, (Meth)acrylamid, sowie Mono- und/oder Dialkyl(meth)acrylamide, wie N-Methyl(meth)acrylamid, N-Benzyl(meth)acrylamid, N-Isobornylmethacrylamid und Diacetonacrylamid.

Zur Herstellung der Copolymerisate (P) können auch weitere funktionelle Gruppen enthaltende Monomere in Mengen von 0 bis 10 Gew.% mitverwendet werden, z.B. Hydroxyalkyl(meth)acrylate wie 2-Hydroxypropyl(meth)acrylat, 4-Hydroxybutyl(meth)acrylat und 2-Hydroxyethyl(meth)acrylat.

Des weiteren können die Copolymerisate (P) auch basische N-Atome aufweisende Monomere in Mengen von 0 bis 5 Gew.% einpolymerisiert enthalten, wie N,N-Diethylaminoethyl(meth)acrylat, N,N-Dimethylaminoethyl(meth)acrylat.

Eine weitere Gruppe Copolymerisate (P) enthält, gegebenenfalls zusätzlich zu den angegebenen Monomeren, in Mengen von 0 bis 20 Gew.% Monomere einpolymerisiert, die heterocyclische und/oder homocyclische Ringe enthalten, wie 2-N-Morpholinoethyl(meth)acrylat, Menthyl(meth)acrylat, Cyclohexyl-(meth)acrylat, N-Isobornyl(meth)acrylat.

Insbesondere können auch reaktive haftvermittelnde Monomere für die Herstellung der Copolymerisate (P) mitverwendet werden, wie 3-Methacryloxypropyltrimethoxysilan, Vinyltriethoxysilan, Vinyltrimethoxysilan; diese werden in Mengen von 0 bis 15 Gew.% mitverwendet.

Eine bevorzugte Gruppe Copolymerisate (P) enthält in Mengen von 0 bis 25 Gew.%, bevorzugt von 0,5 bis 5 Gew.%, Monomere einpolymerisiert, die mindestens eine zur Wasserstoffbrückenbildung befähigte spacergebundene polare Gruppen enthalten; solche Monomere können z.B. durch Umsetzung von Hydroxyalkyl(meth)acrylaten mit Bernsteinsäureanhydrid erhalten werden. Geeignet ist des weiteren Maleinimido-N-hexansäure. Bevorzugt wird aus dieser Monomergruppe das Umsetzungsprodukt von 1,4-Butandiolmono(meth)acrylat und/oder 1,2-Ethandiol(meth)acrylat und/oder 1,2- und/oder 1,3-Propandiol-(meth)acrylat mit Bernsteinsäureanhydrid eingesetzt.

Die Copolymerisate (P) haben meist K-Werte nach DIN 53 726 von 8 bis 150, bevorzugt 10 bis 100, besonders bevorzugt 15 bis 70, ganz besonders bevorzugt 20 bis 55.

Zur Herstellung von Copolymerisaten (P), die sich für Haftkleber eignen, verwendet man bevorzugt solche Monomere, deren Homopolymerisate Glasübergangstemperaturen von unter 0 °C haben, bevorzugt solche, deren Homopolymerisate Glasübergangstemperaturen von unter -10 °C haben, speziell Copolymerisate des n-Butylacrylats, 2-Ethylhexylacrylats, i-Amylacrylats, i-Octylacrylats.

(B) Copolymerisierbare olefinisch ungesättigte, photoreaktive, im durch UV-Strahlung angeregten Zustand zur Wasserstoffabstraktion befähigte Verbindungen.

Zu dieser Substanzklasse gehören Verbindungen, die außer der durch UV-Strahlung anregbaren Atomgruppierung, eine copolymerisierbare Doppelbindung (i.a. (Meth)acrylsäureester) enthalten und die durch Copolymerisation in das Polymere eingebaut werden.

Für den erfindungsgemäßen Zweck geeignete Verbindungen der Klasse (B) sind solche mit der allgemeinen Formel

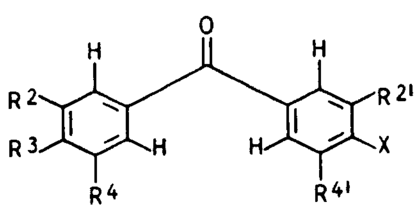

worin bedeuten

X =

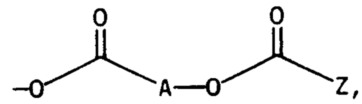

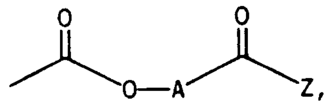

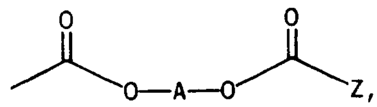

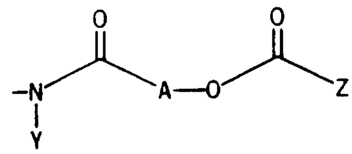 oder

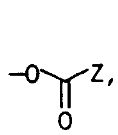 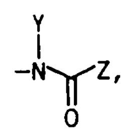 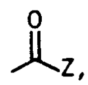

Z =

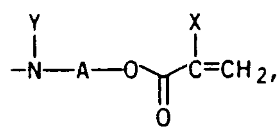

Y - H, $C_1$- bis $C_4$-Alkyl,

A = ein gegebenenfalls verzweigter Alkylrest mit 2 bis 12 C-Atomen, in dem eine oder mehrere $-CH_2$-Gruppen durch O-Atome ersetzt sein können,

$R'^2$, $R'^4$ = H, $C_1$- bis $C_4$-Alkyl, -O-$C_1$- bis $C_4$-Alkyl oder X,

$R^2$, $R^4$ = H, $C_1$- bis $C_4$-Alkyl, -O-$C_1$- bis $C_4$-Alkyl oder $R^3$,

$R^3$ = -H, -COOH, $-SO_3H$, $-CF_3$, $C_1$- bis $C_4$-Alkyl, -O-$C_1$- bis $C_4$-Alkyl,

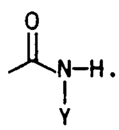

Bevorzugt sind Verbindungen mit

X =

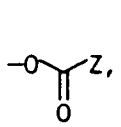 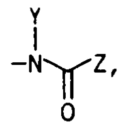 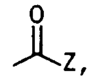

besonders bevorzugt sind Verbindungen mit

X =

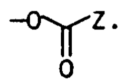

Namentliche Beispiele für geeignete Verbindungen der Klasse (B) sind z.B. p-N-(Methacryloyl-4-oxa-pentamethylen)-carbamoyloxy-benzophenon und N-(Benzoyl-p-phenylen)-N'-(methacryloxyethylen)-carbodiimid.

(C) Die Polymerisation regelnde photoreaktive, im angeregten Zustand zur Wasserstoffabstraktion befähigte Verbindungen sind an sich bekannt; es sind im allgemeinen photoreaktive, im durch UV-Strahlung angeregten Zustand zur Wasserstoffabstraktion befähigte Verbindungen (siehe hierzu z.B. B. Nicholas J. Turro "Modern Molecular Photochemistry", The Benjamin/Cummings Publishing Company Inc., Menlo Park, California 1978).

Zu der erfindungsgemäß einzusetzenden Substanzklasse gehören Verbindungen, die außer der durch UV-Strahlung anregbaren Atomgruppierung, Substituenten enthalten, die die Polymerisation regeln (Isopropylgruppe, benzylische Wasserstoffatome, -S-H (Mercaptogruppe), Heteroatom-CHR' R"-gruppen); diese Verbindungen werden durch Pfropfcopolymerisation (aufgrund ihrer regelnden Eigenschaft) in das Copolymere eingebaut.

Für den erfindungsgemäßen Zweck geeignete Verbindungen der Klasse (C) sind z.B. solche der allgemeinen Formel

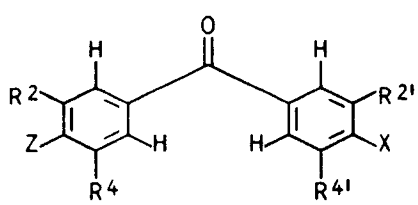

oder

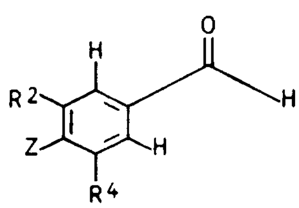

oder

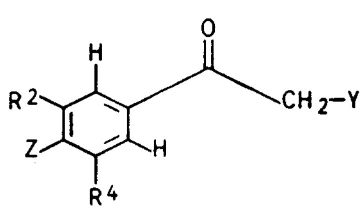

mit Y = H oder $-CH_3$, **worin bedeuten**

X = H, $-O-CH_3$, $-O-C_2H_5$,

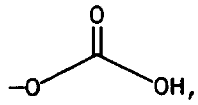

$-CF_3$,

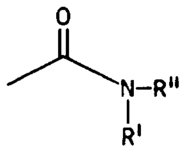

mit

R' = R'' oder R' ≠ R'' und R' , R'' = H, $C_1$-$C_4$-Alkyl,

Z =

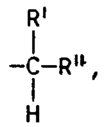, 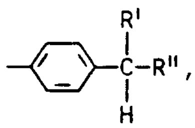, 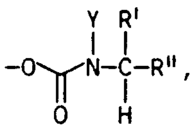, 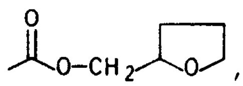,

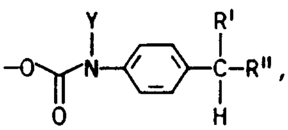, 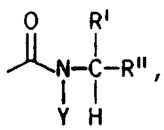, 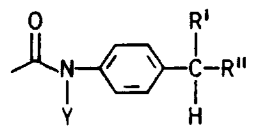,

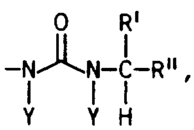, 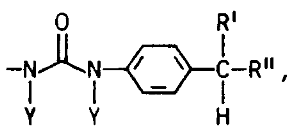, 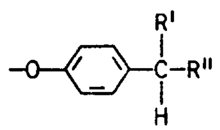,

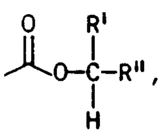, 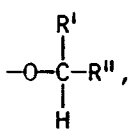, 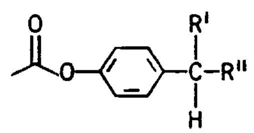,

$R^2$ = $R^4$ oder $R^2 \neq R^4$,

$R^2$, $R^4$ = $CH_3$ oder X,

$R^{2'}$ = $R^{4'}$ oder $R^2 \neq R^{4'}$,

$R^2$, $R^4$ = $CH_3$ oder X.

Der Einsatz der die Polymerisation regelnden Photoinitiatoren der Klasse (C) hat den Vorteil, daß auf Fremdregler z.T. verzichtet werden kann, zum anderen ist die strahlensensitive Gruppe an das Ende der Polymerkette gebunden: daraus ergeben sich Vorteile hinsichtlich der Reaktivität und der erzielbaren mechanischen Eigenschaften bei z.B. Haftklebern. Des weiteren sind diese Verbindungen meist einfacher herzustellen und bedeutend billiger als die copolymerisierbaren Varianten.

Als die Polymerisation regelnde Photoinitiatoren eignen sich z.B. die Derivate des Benzaldehyds, Acetophenons, Benzophenons, Thioxanthons, Ethylphenylketons, Anthrachinons, Benzosuberons, Benzils, die eine Isopropylgruppe tragen, wie z.B. 4-Isopropylbenzophenon, 4-Isopropylthioxanthon, 4-Isopropylacetophenon, 4-Benzophenoncarbonsäureisopropylester, 4-Isopropoxybenzophenon, 4-(4-Isopropylphenyl)-benzophenon, 4-Isopropyl-4'-trifluormethylbenzophenon, 2-Methoxy-4'-isopropylbenzophenon, 3-Methyl-3'-isopropylbenzophenon oder auch 4,4'-Diisopropylbenzophenon.

Bevorzugt sind auch Verbindungen untenstehender Konstitution, wie sie durch Umsetzung von z.B. 4-Hydroxybenzophenon mit 4-Isopropylphenylisocyanat, Isobutylisocyanat, Isopropylpropylisocyanat erhalten werden:

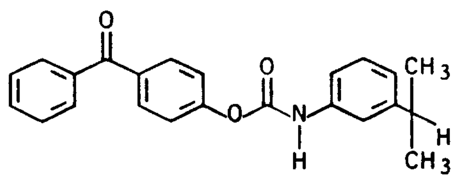

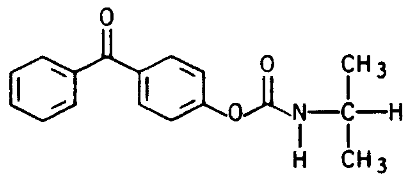

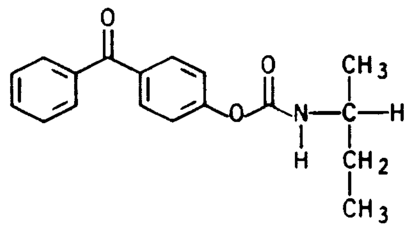

Die Herstellung der Copolymerisate (P) kann durch Substanz, Lösungs- oder Emulsionspolymerisation unter Verwendung geeigneter Polymerisationsinitiatoren erfolgen. Derartige Verfahren sind bekannt und so kann die Herstellung der Copolymerisate (P) in Anlehnung an die DE-PS 25 26 747, DE-OS 30 18 131 oder EP 3516 erfolgen.

Da die Verwendung der Copolymerisate bevorzugt als Reinharze erfolgt, ist die Herstellung der Copolymerisate durch Lösungspolymerisation mit anschließender Abtrennung der flüchtigen Anteile und/oder Substanzpolymerisation und Abtrennen der flüchtigen Anteile bevorzugt.

Für die Polymerisation in Lösung können die üblichen Lösemittel wie z.B. Kohlenwasserstoffe, wie Benzol, Toluol, o-, m-, p-Xylol, Ethylbenzol, Benzine, n-Hexan, Cyclohexan, Ester wie Ethylacetat, Alkohole wie Ethanol, Methanol, iso-Propanol, Ether wie Dioxan, Tetrahydrofuran sowie Gemische aus den genannten Lösemitteln verwendet werden.

Die Menge des Polymerisationsinitiators beträgt im allgemeinen 0,01 bis 5 Gew.%, bezogen auf die Summe der Gewichte der Monomeren (A) + (B) und der/n Verbindung(en) C.

Geeignete Polymerisationsinitiatoren sind 2,2'-Azobisisobutyronitril (Porofor N), Dimethyl-2,2'-azobisisobutyrat (V 601, Fa. Wako), 4,4'-Azobis-(4-cyanvaleriansäure), Perester wie tert.-Butylperpivalat, tert.-Butylperoctoat, tert.-Butylperbenzoat, Peroxide wie Dibenzoylperoxid und Dilauroylperoxid, Hydroperoxide wie Cumolhydroperoxid sowie Peroxidicarbonate wie Dicyclohexylperoxidicarbonat, Ketonperoxide wie Methylethylketonperoxid, Cyclohexanonperoxid. Die genannten Initiatoren können für sich allein oder mit anderen zusammen verwendet werden. Bevorzugt ist die Verwendung von Dimethyl-2,2'-azobisisobutyrat (V 601). Werden die Copolymerisate durch Emulsionspolymerisation hergestellt, so können Initiatoren wie Ammonium-, Natrium- und Kaliumperoxodisulfat oder andere wasserlösliche Initiatoren verwendet werden.

Die genannten Initiatoren können für sich allein oder gemeinsam verwendet werden. Bevorzugt ist die Verwendung von Dimethyl-2,2'-azobisisobutyrat in Mengen von 0,1 bis 5,0 Gew.%.

Für die Durchführung der Polymerisation können auch außer den genannten die Polymerisation regelnden Verbindungen (C) weitere den Polymerisationsgrad senkende Verbindungen dem Reaktionsgemisch zugesetzt werden. Hierfür werden u.a. Mercaptane, wie Mercaptoethanol, Mercaptobernsteinsäure, Mercaptopropionsäure, Mercaptoglycerin, 3-Mercaptopropyltrimethoxysilan, 3-Mercaptopropyl-methyl-dimethoxysilan, Ether wie Dioxan, Tetrahydrofuran, Tetrahydrofurfurylalkohol, Essigsäuretetrahydrofurfurylester, Alkohole wie Isopropanol, Kohlenwasserstoffe wie Isopropylbenzol usw. eingesetzt. Diese Polymerisationsregler werden dabei in Mengen von 0 bis 10 Gew.%, bezogen auf die Summe der Gewichte A + B + C, zugesetzt.

Für die Durchführung der Polymerisation in Lösung wird meist ein Teil oder das gesamte Lösemittel mit einem Teil des Monomerengemisches und einem Teil der gesamten Menge des Polymerisationsinitiators erwärmt. Es wird der Beginn der Polymerisation abgewartet und der Rest des Monomerengemisches und gegebenenfalls der Rest des Polymerisationsinitiators und gegebenenfalls noch Lösemittel zugefügt. Die Polymerisation erfolgt bevorzugt in hochkonzentrierter Lösung, bevorzugt bei Monomerkonzentrationen von über 50 Gew.%, besonders bevorzugt von über 65 Gew.%, ganz besonders bevorzugt von über 80 Gew.%.

Die Polymerisation kann unter Druck, z.B. bei 1 bis 100 bar oder auch unter Normaldruck erfolgen. Die Polymerisation erfolgt bei Temperaturen von 50 bis 230 ° C, bevorzugt zwischen 70 und 120 ° C.

Die Verbindung (B), die in Mengen von 0 bis 10 Gew.%, bevorzugt in Mengen von 0,01 bis 5 Gew.%, ganz besonders bevorzugt in Mengen von 0,1 bis 2,5 Gew.%, bezogen auf die Summe der Gewichte von (A) + (B) + (C), eingesetzt wird, wird in der Regel in den Monomeren (A) gelöst und so der polymerisierenden Reaktionsmischung zugefügt. Gegebenenfalls wird auch so verfahren, daß die Verbindung (B) in einem geeigneten Lösemittel gelöst, der Reaktionsmischung zugesetzt wird.

Die Verbindung (C), die in Mengen von 0,1 bis 10 Gew.%, bevorzugt in Mengen von 0,1 bis 7,5 Gew.%, ganz besonders bevorzugt in Mengen von 1,0 bis 5 Gew.%, bezogen auf die Summe der Gewichte (A) + (B) + (C), eingesetzt wird, wird in der Regel direkt in der anzupolymerisierenden Vorlage gelöst. In einer anderen Ausführungsform der Polymerisation wird die Verbindung C in einem Lösemittel oder in einem Teil des Monomerg misches gelöst und der polymerisierenden Mischung in einer Zeit zugesetzt, die unter der Zulaufzeit der Monomerlösung liegt, so daß nach beendeter Zugabe der Verbindung (C) immer noch Monomere zugegeben werden müssen.

Für die Verwendung der Copolymerisate als Reinharze wird nach beendeter Polymerisation das Lösemittel(gemisch) bei höherer Temperatur abdestilliert, Lösemittelreste und gegebenenfalls flüchtige Anteile werden im Hochvakuum bei Temperaturen von 80 bis 150 ° C entfernt.

Die Entfernung der Lösemittel und der flüchtigen Anteile kann direkt aus derm Polymerisationskessel heraus erfolgen, gegebenenfalls kann die Copolymerisatlösung gegebenenfalls nach einer Aufkonzentrierung einem Entgasungsgerät zugeführt und dort entgast werden.

Die hergestellten Harze haben meist Feststoffgehalte von 99,5 bis 100 Gew.%.

Die für Haftkleber einzusetzenden UV-vernetzbaren Copolymerisate haben meist K-Werte von 20 bis 65 und einen Trockenverlust (TV) von TV < 0,2 Gew.%.

Der K-Wert der Copolymerisate richtet sich nach den gewünschten Eigenschaften, insbesondere auch nach der gewünschten Schmelzviskosität der Copolymerisate.

Die Auswahl und Kombination der Monomeren (A) richtet sich nach dem Verwendungszweck der UV-vernetzbaren Copolymerisate (P) und auch nach der gewünschten Schmelzviskosität.

Durch die Auswahl und Abstimmung der Komponmenten (A) und (C) ist es möglich, Copolymerisate mit niedrigen K-Werten herzustellen, die sich dennoch mit UV-Strahlen schnell härten lassen. Durch die eingesetzte Menge an (B) und (C) läßt sich sehr einfach der erzielbare Vernetzungsgrad einstellen. Die Copolymerisate lassen sich so jeweils für den beabsichtigten Verwendungszweck maßgeschneidert einstellen.

Insbesondere können nach dem neuen Verfahren Copolymerisate hergestellt werden, die sich photochemisch und chemisch härten lassen. So können z.B. klebfreie Abdichtungen dadurch erhalten werden, daß z.B. feuchtigkeitshärtende Dichtungsmassen nach ihrer Applikation mit UV-Licht (auch Sonnenlicht) bestrahlt werden, wodurch eine klebfreie Oberfläche erzielt wird.

Insbesondere richtet sich die Auswahl der Komponenten (B) und (C) nach deren UV-Absorptionsspektren und ihren Extinktionskoeffizienten; so ist weiterhin eine einfache optimale Anpassung an gegebene UV-Strahler möglich, insbesondere lassen sich auch Copolymerisate erhalten, die unter natürlichem Sonnenlicht vernetzen.

Die erfindungsgemäß hergestellten Copolymerisate können in an sich üblicher Weise modifiziert und/oder konfektioniert werden.

Für den Einsatz der Copolymerisate für Haftkleber können z.B. die üblichen klebrigmachenden Harze, wie Kohlenwasserstoffharze, gegebenenfalls modifizierte Kolophoniumharze, Terpenphenolharze, Ketonharze, Aldehydharze, Homopolymerisate wie Poly-2-ethylhexyl(meth)acrylat, Poly-iso-amyl(meth)acrylat, Polyisobutylacrylat, Poly-n-butylacrylat und auch entsprechende Copolymerisate, Cumaron-Inden-Harze, Weichmacher auf Basis von Mono-, Di- oder Polyesterverbindungen, polychlorierte Kohlenwasserstoffe oder Paraffinöle, Natur- und Synthesekautschuk, Polyvinylether oder andere Modifizierungsmittel zugegeben werden.

Es ist ein überraschender Vorteil der neuen Copolymerisate, daß die Modifizierungsmittel durch die UV-Bestrahlung z.T. an die Copolymeren chemisch gebunden werden; dadurch kann die Migration der Modifizierungsmittel stark bzw. völlig eingeschränkt werden.

Geeignete klebrigmachende Harze sind z.B. Foral 85, Pentalyn H und Staybelite Ester 10 (Fa. Hercules Inc.). Weiterhin Polyvinylether wie die Lutonal-Typen der BASF - z.B. Lutonal I 30 und Poly-n-butylacrylat wie Acronal 4 F (BASF). Die klebrigmachenden Harze können den erfindungsgemäßen Mitteln in Mengen von 0 bis 50 Gew.% zugesetzt werden.

Die erfindungsgemäßen Copolymerisate können auch durch Zusatz von ein- und/oder mehrfach olefinisch ungesättigten Verbindungen weiter modifiziert werden und so den jeweiligen Wünschen der klebstoffverarbeitenden Industrie angepaßt werden. Die olefinisch ungesättigten Verbindungen werden hierfür in Mengen von 0 bis 50 Gew.% eingesetzt, bevorzugt jedoch nur in Mengen von 0 bis 10 Gew.%, besonders bevorzugt in Mengen von 0 bis 5 Gew.%.

Die neuen Copolymerisate eignen sich besonders als Schmelzen oder aber auch als Lösungen oder wäßrige Dispersionen zur Herstellung von Überzügen, Beschichtungen und Imprägnierungen, insbesondere zur Herstellung von Haftkleberfolien, -etiketten, einseitigen oder doppelseitigen Haftklebebändern, Elektroisolierungen sowie Prägezangenfolien. Bevorzugt ist die Verwendung der reinen Copolymerisate.-

Dabei können die Schmelzen mittels üblicher Auftragsaggregate gegebenenfalls bei höherer Temperatur, bei 20 bis 150 °C, bevorzugt bei bis zu 100 °C, besonders bevorzugt bei bis zu 80 °C in an sich üblicher Weise durch Streichen, Spritzen, Walzen, Rakeln oder Gießen auf flächige Substrate aufgebracht werden, beispielsweise auf Papier, Pappe, Zellstoff, Holz, Metalle oder Folien, z.B. auf gegebenenfalls weichgemachten PVC, Polyethylen, Polyamid, Polyethylenglykolterephthalat oder Aluminium und insbesondere auch Polypropylen. Von den beschichteten Trägern könne die Lösemittel oder Dispergiermittel, sofern die erfindungsgemäßen Mittel in Form von Lösungen oder Dispersionen eingesetzt werden, leicht, gegebenenfalls bei Raumtemperatur oder wenig erhöhtem Temperaturen, abgedampft werden; die Trocknung kann hierbei in üblicher Weise durch die Verwendung von z.B. Heizstrahlern oder Wärmewälzvorrichtungen bei Temperaturen von 20 bis 150 °C erfolgen.

Die gegebenenfalls getrockneten oder vorgetrockneten Beschichtungen werden anschließend durch Bestrahlen mit ultraviolettem Licht unter Inertgasatmosphäre oder Luftsauerstoffatmosphäre vernetzt, wobei man gut klebende Überzüge erhält, die eine hohe Kohäsion und eine sehr gute Schälfestigkeit bei vorzüglicher Alterungsbeständigkeit aufweisen. Die vernetzten wasserfreien überzüge zeigen bei Wasserlagerung kein Weißanlaufen.

Die Bestrahlung der beschichteten Substrate kann in an sich üblicher Weise mit dem Licht von UV-Strahlern, z.B. Quecksilbernieder-, Quecksilbermitteldruck und Quecksilberhochdruckstrahlern unterschiedlicher Leistung von z.B. 80 W/cm, 100 W/cm oder 120 W/cm erfolgen; die Auswahl der Strahler richtet sich u.a. nach dem Absorptionsspektrum der Copolymerisate bzw. der eingesetzten Verbindungen (B) und (C).

Lampen mit einer höheren Leistung ermöglichen im allgemeinen eine schnellere Vernetzung. Je nach der Geschwindigkeit mit der das beschichtete Substrat die UV-Anlage durchläuft, arbeiten ein, zwei oder mehrere Lampen in einer Anlage.

Die erfindungsgemäßen Copolymerisate lassen sich insbesondere auch unter Luftsauerstoffatmosphäre vernetzen; die Bestrahlung unter Inertgasatmosphäre ist nicht erforderlich.

Überraschenderweise erlauben die erfindungsgemäßen Copolymerisate jederzeit die Unterbrechung und Fortsetzung des Bestrahlungsvorganges.

Es ist weiterhin überraschend, daß sich auch dickere Schichten der erfindungsgemäßen Copolymerisate rasch vernetzen lassen; übliche Trockenschichtdicken liegen hierbei zwischen 10 und 100 µm. Die Vernetzung von noch dickeren Schichten ist ebenfalls möglich und von der Auswahl der Verbindungen B und C abhängig.

Prüfung der anwendungsstechnischen Eigenschaften

Die Klebeeigenschaften von flächigen Substraten, die eine Haftklebeschicht aufweisen, kann durch Messen der Scherfestigkeit als Maß für die Kohäsion und der Schälfestigkeit als zusammenfassendes Maß für Kohäsion und Oberflächenklebrigkeit erfaßt werden.

Für die Prüfung werden Folien aus Polyethylenglykolterephthalat bzw. Polypropylen mit den erfindungsgemäßen Mitteln derart beschichtet, daß sich ein Flächenauftrag von 25 g/qm bzw. 50 g/qm ergibt.

Die beschichteten Folien werden auf ein laufendes Endlosband gelegt und mit verschiedenen Geschwindigkeiten (von 5 m/min - 20 m/min) unter zwei hintereinandergeschalteten UV-Strahlern Hg-Mitteldrucklampen mit einer Strahlungsleistung von jeweils 80 W/cm hindurch gefahren. Die Bestrahlung erfolgte unter Luftsauerstoffatmosphäre.

Die Geschwindigkeit, mit der die Beschichtungen die UV-Anlage durchlaufen können, um eine ausreichende Vernetzung zu erzielen, richtet sich unter anderem nach dem K-Wert des Copolymerisats. Copolymerisate mit steigendem K-Wert benötigen kürzere Bestrahlungszeiten.

Die so hergestellten Folien werden in 2 cm breite Streifen geschnitten und diese Streifen auf eine verchromte Messingplatte aufgebracht. Die Platte wird dann mit den Streifen 24 Stunden bei 230 °C und 65 % rel. Luftfeuchtigkeit gelagert.

Zur Messung der Schälfestigkeit werden die Prüfstreifen parallel zur Klebeschicht mit einer Geschwindigkeit von 300 mm/min rückwärts abgezogen. Die hierfür erforderliche Kraft wird gemessen.

Bei der Messung der Scherfestigkeit wird eine verklebte Fläche von 20 x 45 mm zurechtgeschnitten, die Platte senkrecht eingespannt und der überhängende Teil des Klebestreifens mit einem Gewicht von 1 kg belastet. Es wird die Zeit bestimmt, bis sich die Verklebung löst. Die Messung wird bei 23 °C und 50 °C durchgeführt. Alle Messungen werden 5fach gemacht.

Die in den folgenden Beispielen angegebenen Teile und Prozente beziehen sich auf das Gewicht. Die Bestimmung der K-Werte erfolgte nach DIN 53 726 in 1%iger Lösung in Tetrahydrofuran bei 25 °C.

Die Bestimmung der Feststoffgehalte bzw. des Trockenverlustes (TV) der Harze erfolgte mit einer automatisch registrierenden Thermowaage mit aufgesetztem Infrarotstrahler bei 130 °C über 60 Minuten.

Die Schmelzviskositäten wurden aus den mit einem Platte-Kegel-System aufgenommenen Fließkurven erhalten. Die für Haftkleber verwendeten Copolymerisate haben Schmelzviskositäten bei 20 °C von 30 bis 10 000 Pa.s.

Die folgenden, in den Beispielen aufgeführten Copolymerisate wurden in einer üblichen Polymerisationsapparatur, die mit einem Rührer, verschiedenen Zulaufgefäßen, einem Rückflußkühler, einem Inertgasanschluß, einer Heizung/Kühlung, verschiedenen Kontrollthermometern und für das Arbeiten unter Druck und Vakuum ausgerüstet ist, hergestellt.

In den Beispielen werden die folgenden Abkürzungen verwendet:

Verbindung B 1 =

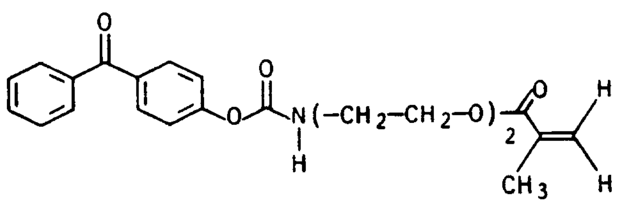

Verbindung B 2 =

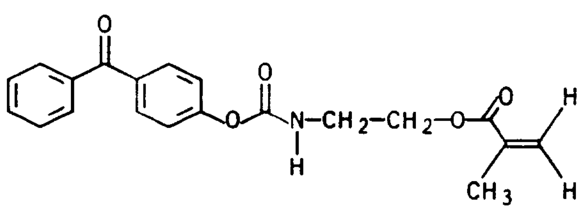

Verbindung C 1 =

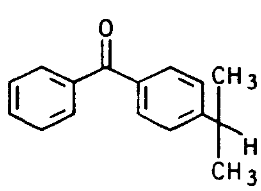

Verbindung C 2 =

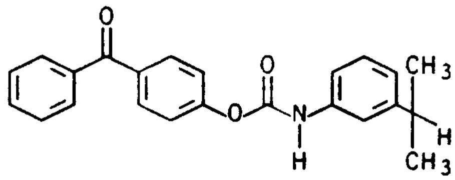

Beispiel 1 ( nicht erfindungsgemäß )

(Copolymerisat P 1; UV-vernetzbares Copolymerisat für Haftkleber)

Zu einer unter leichtem Rückfluß kochenden Mischung aus 200 g Ethylacetat, 50 g Tetrahydrofuran, 5 g 2,2'-Azobisisobutyronitril und 200 g einer Monomermischung aus 150 g 2-Ethylhexylacrylat, 690 g n-Butylacrylat, 100 g Methylmethacrylat, 50 g Methylacrylat, 10 g Acrylsäure, 7 g Monomer B 1 gibt man im Ablauf von 3 Stunden den Rest der Monomermischung. Man rührt noch 2 Stunden nach und gibt anschließend eine Lösung von 2 g tert.-Butylper-2-ethylhexanoat in 83 g Ethylacetat hinzu. Nach beendeter Zugabe rührt man noch 2 Stunden nach.

Man erhält ein Copolymerisate P 1 mit einem K-Wert von 44. Das Copolymerisat hat bei 100 ° C eine Schmelzviskosität von 30 Pa.s.

Das Lösemittel wird anschließend unter vermindertem Druck bei erhöhter Temperatur abdestilliert. Man erhält ein bei Raumtemperatur fließendes Copolymerisat.

Beispiel 2

(Copolymerisat P 2; UV-vernetzbares Copolymerisat für Haftkleber)

Man polymerisiert eine Monomermischung aus 810 g Isoamylacrylat, 175 g n-Butylacrylat, 15 g Acrylsäure, 7,5 g Monomer B 2 und 5 g der Verbindung C 2 in der oben angegebenen Weise unter Verwendung von 5 g Dimethyl-2,2'-azobis-isobutyrat (Azostarter Wako V 601); man verzichtet jedoch auf den Zusatz von Tetrahydrofuran.

Das Copolymerisate P 2 hat einen K-Wert von 25 und eine Schmelzviskosität bei 80 ° C von 15 Pa.s.

Beispiel 3

(Copolymerisat P 3; UV-vernetzbares Copolymerisat für Haftkleber)

Man polymerisiert eine Monomermischung aus 800 g 2-Ethylhexylacrylat, 100 g Vinylacetat, 30 g Methylmethacrylat, 20 g des Bernsteinsäuremonoesters von 1,4-Butandiolmonoacrylat, 25 g Acrylsäure und 25 g Diacetonacrylamid, 7,5 g der Verbindung B 1 und 2,5 g 4-Isopropylbenzophenon (C 1) unter Verwendung von 2,2'-Azobisisobutyronitril als Polymerisationsinitiator in Ethylacetat.

Man erhält ein Copolymerisate P 3 mit dem K-Wert von 35 und einer Schmelzviskosität bei 50 ° C von 40 Pa.s.

Beispiele 4 bis 7

Mit den von flüchtigen Anteilen befreiten Copolymerisaten wurden die folgenden Mischungen hergestellt:

| Mischung | Copolymerisat | Modifizierungsmittel |
|---|---|---|
| M 4 | 90 Gew.% P 3 | 10 Gew.% Acronal 4 F (BASF) |
| M 5 | 90 Gew.% P 3 | 10 Gew.% Lutanol I 30 (BASF) |
| M 6 | 90 Gew.% P 3 | 5 Gew.% Staybelite Ester 10 |
| M 7 | 90 Gew.% P 3 | 10 Gew.% Staybelite Ester 10 |

Tabelle 1

| Bestrahlungsbedingungen | | | |
|---|---|---|---|
| Beispiel Nr. | Copolymeriat/Mischung | Flächenauftrag [g/qm] | Bandgeschwindigkeit [m/min] |
| 1 ** | P 1 | 25 g | 10 |
| 2 | P 2 | 25 g | 20 |
| 3 | P 2 | 50 g | 15 |
| 4 | M 4 | 25 g | 15 |
| 5 | M 5 | 25 g | 15 |
| 6 | M 6 | 25 g | 15 |
| 7 | M 7 | 25 g | 15 |

**) nicht erfindungsgemäß

Tabelle 2

| Ergebnisse der anwendungstechnischen Prüfung als Haftkleber | | | | | |
|---|---|---|---|---|---|
| Beispiel Nr. | Scherfestigkeit | | Schälfestigkeit [N/2 cm] | | Klebrigkeit*) |
| | [h] 23 °C | bei 50 °C | sofort | n. 24 Std. | |
| 1 ** | > 24 | > 6 | 5,0 | 7,6 | gut |
| 2 | > 24 | > 24 | 6,7 | 9,2 | gut |
| 3 | > 24 | > 24 | 7,5 | 11,5 | gut |
| 4 | > 24 | > 24 | 3,0 | 4,5 | gut |
| 5 | > 24 | > 9 | 3,0 | 5,0 | gut |
| 6 | > 24 | > 7 | 5,0 | 8,5 | gut |
| 7 | > 24 | > 3 | 7,0 | 12,0 | gut |

*) Die Klebrigkeit wurde durch eine Gruppe beurteilt.
**) nicht erfindungsgemäß

## Patentansprüche

**1.** Verfahren zum Herstellen durch ultraviolette Strahlung unter Luftsauerstoffatmosphäre vernetzbarer Copolymerisate, dadurch gekennzeichnet, daß man eine Mischung aus

(A) 80 bis 99,9 Gew.-% olefinisch ungesättigten Monomeren,

(B) 0 bis 10 Gew.-% einer copolymerisierbaren olefinisch ungesättigten, photoreaktiven, im durch UV-Strahlung angeregten Zustand zur Wasserstoffabstraktion befähigten Verbindung, und

(C) 0,1 bis 10 Gew.-% einer, die Polymerisation regelnden, photoreaktiven, im angeregten Zustand zur Wasserstoffabstraktion befähigten Verbindung, welche keine copolymerisierbare, olefinisch ungesättigte Doppelbindung enthält,

radikalisch polymerisiert, wobei die Summe aus (B) und (C) mindestens 0,1 Gew.-% beträgt und die angegebenen Gewichtsprozent sich auf die Summe der Gewichte aus (A) + (B) + (C) beziehen.

## Claims

**1.** A process for the preparation of a copolymer which is crosslinkable by ultraviolet radiation in the air, wherein a mixture of

(A) from 80 to 99.9% by weight of olefinically unsaturated monomers,

(B) from 0 to 10% by weight of a copolymerizable, olefinically unsaturated photoreactive compound which, in the excited state produced by UV radiation, is capable of abstracting hydrogen, and

(C) from 0.1 to 10% by weight of a polymerization-regulating, photoreactive compound which does not contain a copolymerizable, olefinically unsaturated double bond and, in the excited state, is capable of abstracting hydrogen

is subjected to free radical polymerization, the sum of (B) and (C) being not less than 0.1% by weight and the stated percentages by weight being based on the sum of the weights of (A) + (B) + (C).

## Revendications

**1.** Procédé de fabrication de copolymères réticulables par un rayonnement ultraviolet en atmosphère d'oxygène de l'air, caractérisé en ce que l'on polymérise par voie radicalaire un mélange constitué de

(A) 80 à 99,9% en poids de monomères oléfiniquement insaturés,

(B) 0 à 10% en poids d'un composé copolymérisable, oléfiniquement insaturé, photoréactif, susceptible d'abstraction d'hydrogène à l'état excité par le rayonnement UV et

(C) 0,1 à 10% en poids d'un composé régulateur de polymérisation, photoréactif, susceptible d'abstraction d'hydrogène à l'état excité, qui ne contient pas de double liaison oléfiniquement insaturée, copolymérisable,

où la somme de (B) et de (C) atteint au moins 0,1% en poids et les pourcentages pondéraux indiqués se rapportent à la somme des poids de (A) + (B) + (C).